# EUROPEAN PATENT SPECIFICATION

(11) **EP 1 931 048 B1**
(45) Date of publication and mention of the grant of the patent: **29.08.2012**
(21) Application number: 07122204.6
(22) Date of filing: 04.12.2007
(51) Int. Cl.: G01C 21/36

(54) **Electronic apparatus, electronic system and method of controlling audio output**
Elektronische Vorrichtung, elektronisches System und Verfahren zur Steuerung der Audioausgabe
Appareil et système électronique et procédé pour le contrôle de la sortie audio

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(43) Date of publication of application: 11.06.2008
(73) Proprietor: FUJITSU TEN LIMITED, Kobe-shi Hyogo 652-8510 (JP)
(72) Inventor: Koutari, Hiroshi, Kobe-shi, Hyogo 652-8510 (JP)
(74) Representative: Ward, James Norman

(56) References cited:
- WO-A1-2004/032591
- US-A- 5 537 673
- US-A- 6 058 298

## Description

This invention relates to an electronic apparatus and electronic system.

As conventional navigation apparatuses, there are widely known small-sized portable navigation apparatuses with simplified structure and portability (hereinafter, referred to as Portable Navi), also known as PND (Personal Navigation Device); and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, the navigation apparatuses with portability of the Portable Navi and high-accuracy guide function of the in-vehicle navigation apparatus have been studied.

Japanese Patent Application Publication No. 8-318792, Japanese Patent Application Publication No. 2002-328026, Japanese Patent Application Publication No. 2005-524570, and Japanese Patent Application Publication No. 2001-239895 disclose a configuration where a navigation portion can be detached from an in-vehicle apparatus mounted in a vehicle. By removing the navigation portion from the in-vehicle apparatus, the navigation portion can be used as a Portable Navi of a single unit.

Also, as disclosed in Japanese Patent Application Publication No. 2003-166848, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

However, if audio guidances are output from both of Portable Navi and the in-vehicle apparatus when Portable Navi is attached to the in-vehicle apparatus mounted in a vehicle, it may be difficult for a user to understand such audio guidances, and in addition, the power will be wasted.

US 5537673A discloses a removable panel with a plurality of operation buttons for operating a car stereo. A cellular telephone system operated by the operation buttons is provided in the panel. A controller is provided in the panel for rendering the car stereo inoperative in response to an instruction received through the cellular telephone system.

WO2004/032591A1 discloses a portable wireless communication device and method for configuring the same when connected to a hands-free system in a vehicle. In one embodiment, the device has an interface and a detector. The interface is for connecting the wireless communication device to a hands-free control unit in the vehicle. The detector is for determining whether the interface is connected to the hands-free control unit in the vehicle. The wireless communication device may obtain vehicle information from the vehicle when it is determined that the interface is connected to the hands-free control unit. The wireless communication device also configures at least one operation of the wireless communication device based on the obtained vehicle information.

US 6058298A discloses a vehicular audio/cellular telephone system including a vehicular audio system and cellular telephone. A recorder means, typically in the form of a cassette player, is provided to record communications over the cellular telephone. When integrated into the vehicular audio system, the cellular telephone uses the vehicle's power source and external antenna.

The present invention has been made in view of the above circumstances and provides an electronic apparatus and an electronic system, in which a portable apparatus can be attached or detached with ease.

The specific aspects of the invention are defined by the features in as recited in the independent claims.

Further embodiments are defined in the dependent claims.

Exemplary embodiments of the present invention will be described in detail with reference to the following drawings, by way of example only, wherein:
FIG. 1A shows an exterior view of an in-vehicle system, and FIG. 1B shows a state where a portable apparatus is detached from an in-vehicle apparatus;
FIG. 2 shows a front face portion of the in-vehicle apparatus, from which the portable apparatus is removed;
FIG. 3 is a view showing a state of tilting the front face portion against the main body of the in-vehicle apparatus to expose a CD insertion/ejection slot;
FIG. 4 shows a state of mounting the in-vehicle system in a vehicle;
FIG. 5 shows a configuration of the in-vehicle system;
FIG. 6 shows a configuration of a detecting circuit;
FIG. 7 shows a configuration of the front face portion;
FIG. 8A through FIG. 8C show display examples of the portable apparatus attached to a main body;
FIG. 9 is a block diagram showing a configuration of a sound adjusting portion;
FIG. 10A shows a front view, top view, bottom view, left-side view, and right-side view of the portable apparatus, and FIG. 10B is a back view of the portable apparatus; and
FIG. 11 is a flowchart showing a procedure of a controller of the in-vehicle apparatus.

A description will now be given, with reference to the accompanying drawings, of exemplary embodiments of the present invention.

### (Embodiment)

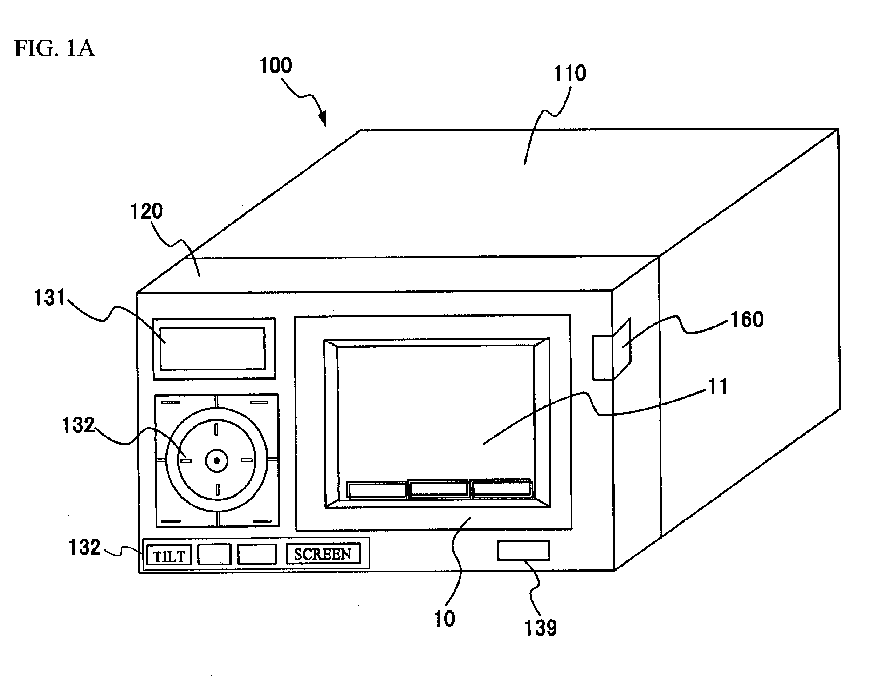

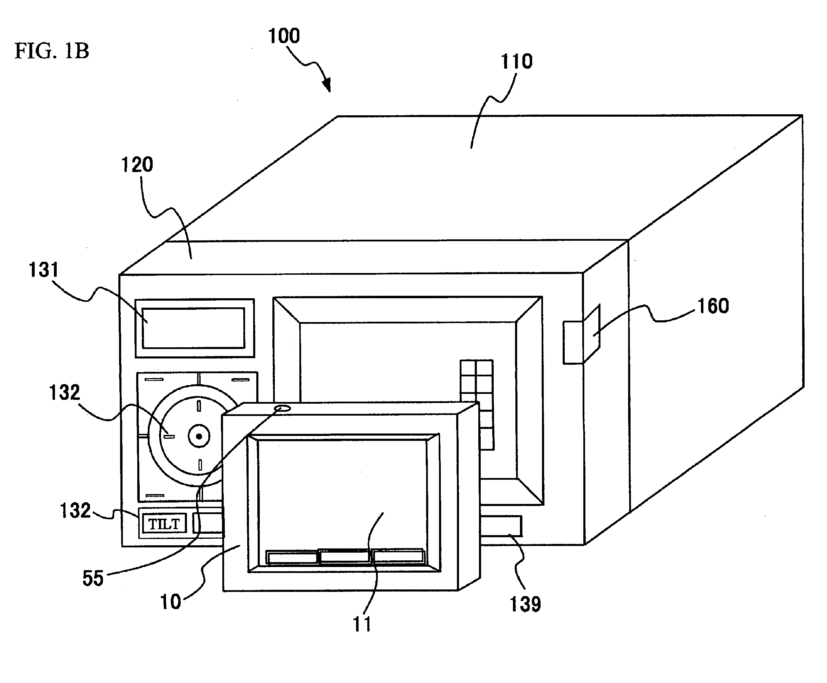

FIG. 1A and FIG. 1B show exterior views of an in-vehicle system 1, as an example of an electronic system. As shown in FIG. 1A and FIG. 1B, the in-vehicle system 1 is composed of: an in-vehicle apparatus 100 (electronic apparatus); and a portable apparatus 10 (portable apparatus) with navigation capabilities. The portable apparatus 10 can be used after being attached at a front face portion 120 of the in-vehicle apparatus 100, as shown in FIG. 1A, and can be also used after being detached from the in-vehicle apparatus 100, as shown in FIG. 1B.

The in-vehicle apparatus 100 is capable of playing radio broadcasting or playing music data recorded on a memory medium such as a CD (Compact Disc) or the like, and the in-vehicle apparatus 100 includes: an in-vehicle apparatus main body 110 having a CD player and a CD insertion/ejection slot; and the front face portion 120 having a display portion 131 and an operating portion (main operating portion) 132.

The portable apparatus 10 has navigation capabilities of searching for a guiding path (route) to a destination and displaying the searched guiding path (route) over a map.

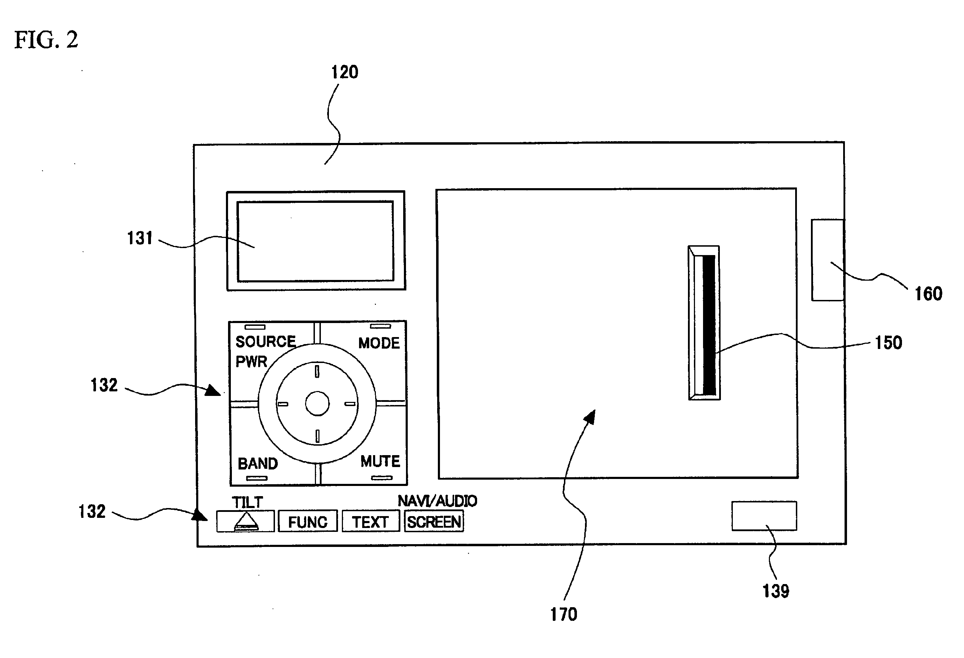

FIG. 2 shows the front face portion 120 of the in-vehicle apparatus 100, from which the portable apparatus 10 is removed. There is provided an attaching portion 170 in which a recess portion is defined for attaching the portable apparatus 10, at the front face portion 120 of the in-vehicle apparatus 100. The attaching portion 170 is provided with: a connector 150 (housing portion side connector) for electrically coupling the in-vehicle apparatus 100 and the portable apparatus 10; and a lock mechanism (not shown) for securing the portable apparatus 10 to the front face portion 120. When a detach button 160 provided at the front face portion 120 is operated, a lock mechanism, not shown, is unlocked and the portable apparatus 10 is detachable from the in-vehicle apparatus 100.

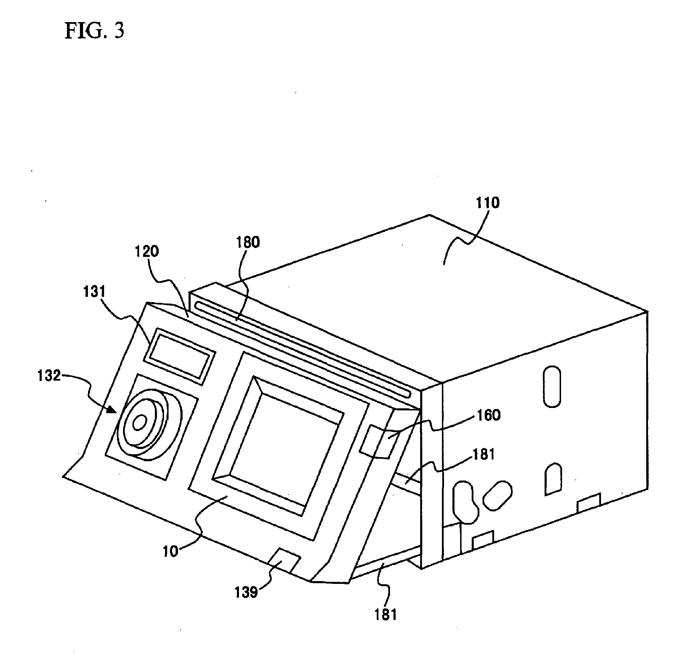

FIG. 3 shows a state of tilting the front face portion 120 against the in-vehicle apparatus main body 110 to expose a CD insertion/ejection slot 180.

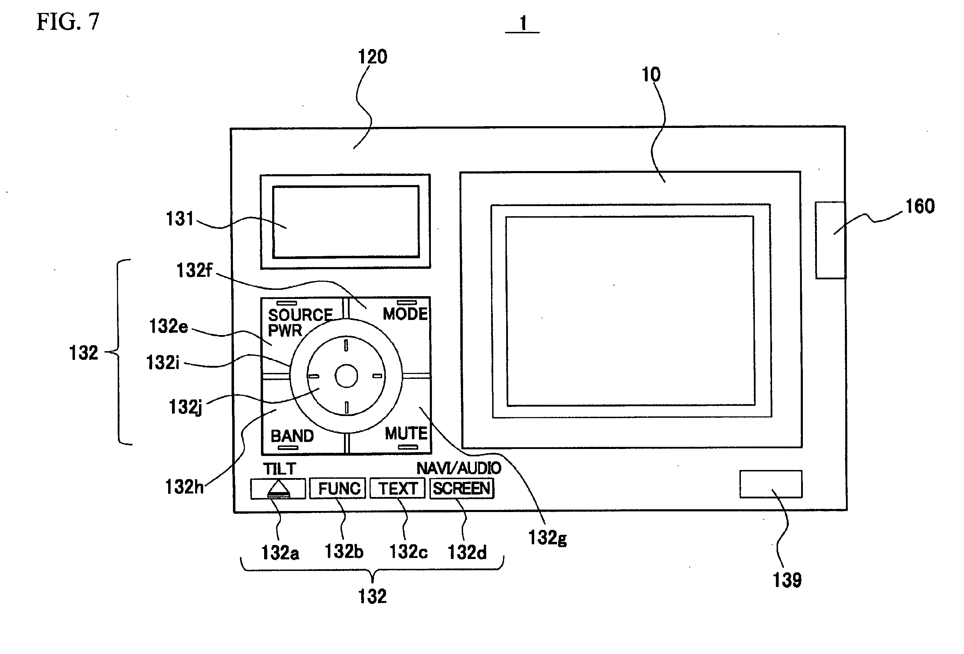

By driving a slider 181 shown in FIG. 3 with a drive mechanism, not shown, the front face portion 120 can be tilted against the in-vehicle apparatus main body 110. By tilting operation, the CD insertion/ejection slot 180 provided in the in-vehicle apparatus main body 110 is exposed, so a CD can be inserted or ejected. There is provided an operation button (a tilt/eject button 132a shown in FIG. 7), at the front face portion 120 of the in-vehicle apparatus 100, and a tilt angle can be set according to the operation of the button.

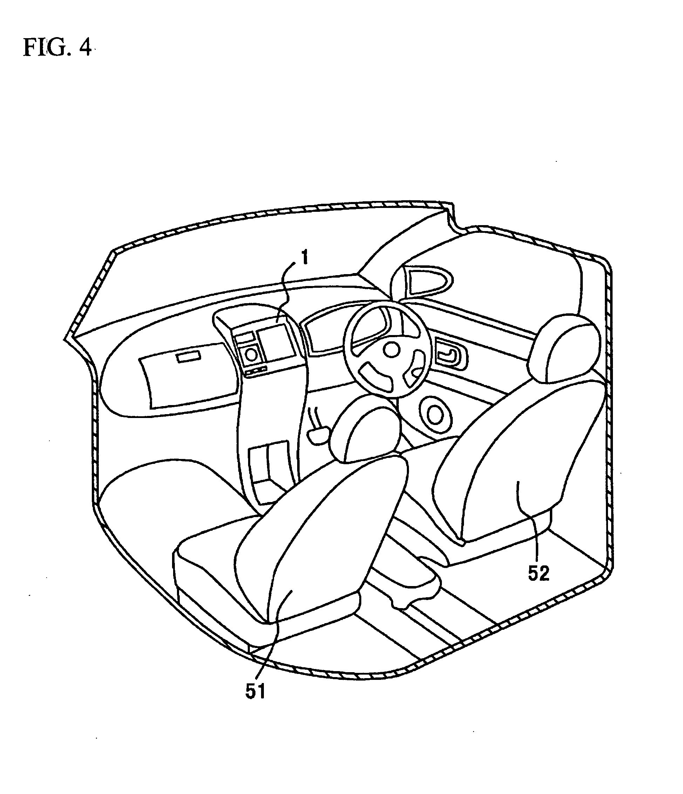

FIG. 4 illustrates an example of mounting the in-vehicle system 1 in a vehicle.

The in-vehicle system 1 is disposed in a dashboard portion substantially in the middle of a front-passenger's seat 51 and a driver's seat 52, as shown in FIG. 4, for example.

Here, a GPS (Global Positioning System) antenna, not shown, of a GPS information receiver 133 is located on the dashboard or attached at an inner side of a front glass.

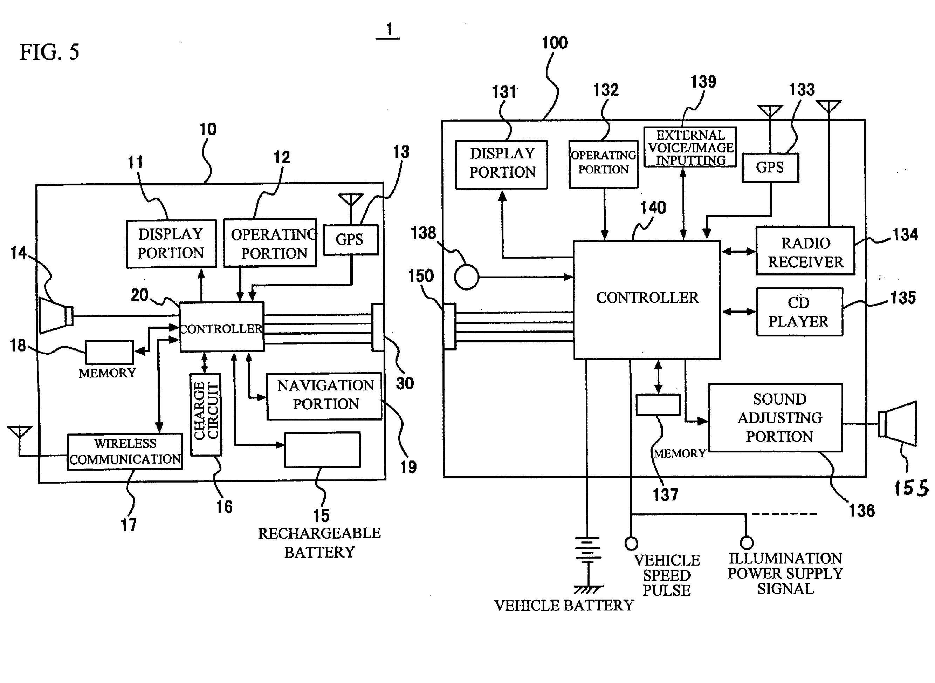

FIG. 5 is a block diagram showing a schematic configuration of the in-vehicle system 1.

The in-vehicle apparatus 100 and the portable apparatus 10 are electrically connected by connectors. The connector 150 is provided at the in-vehicle apparatus 100 side, and a connector 30 (portable apparatus side connector) is provided at the portable apparatus 10. By connecting the connectors 150 and 30, various signals are sent and received between the in-vehicle apparatus 100 and the portable apparatus 10 to function as the in-vehicle system 1. The connectors 150 and 30 are respectively provided with power supply terminals for supplying power to the portable apparatus 10 from the battery of the vehicle. When the portable apparatus 10 is connected to the in-vehicle apparatus 100 and the power is supplied to the in-vehicle apparatus 100, the power is also supplied to the portable apparatus 10 via the power supply terminals.

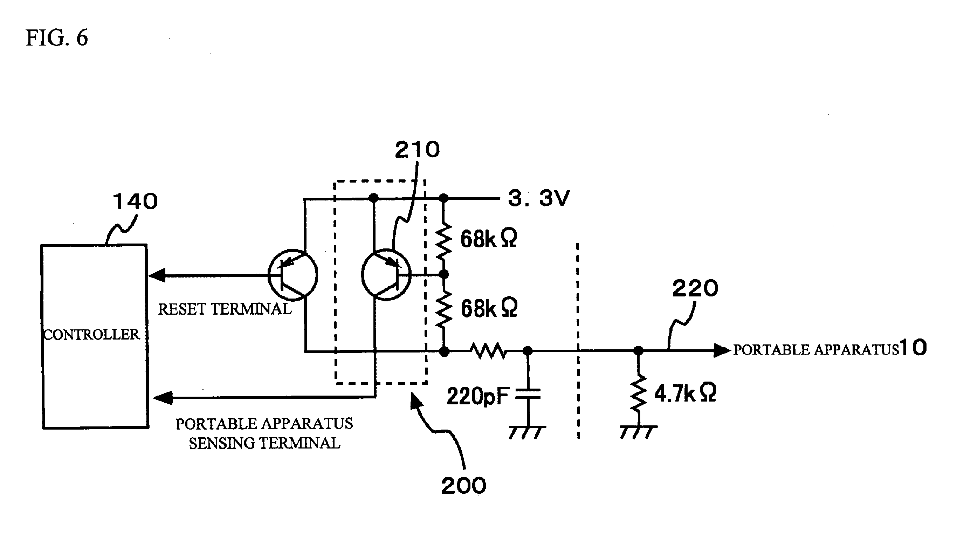

Also, at a connecting portion connecting the in-vehicle apparatus 100 and the portable apparatus 10, there is provided a detecting circuit 200 detecting whether or not the portable apparatus 10 is connected to the in-vehicle apparatus 100. FIG. 6 shows a configuration of the detecting circuit 200.

When the portable apparatus 10 is connected to a power line 220 for supplying power to the portable apparatus 10, a transistor 210 turns on. Accordingly, when the portable apparatus 10 is connected to the power line 220, a signal of 3.3 V is output to a controller 140 of the in-vehicle apparatus 100. Also, when the portable apparatus 10 is removed from the power line 220, the transistor 210 turns off. Then, a signal of 0 V is output to the controller 140 of the in-vehicle apparatus 100.

When the output voltage of 3.3 V is sensed at a portable apparatus sensing terminal connecting the transistor 210 and the controller 140, the controller 140 senses a connected state. When 0 V is sensed, the controller 140 senses an unconnected state.

The in-vehicle apparatus 100 is provided with: the display portion 131; the operating portion 132; the GPS information receiver 133; a radio receiver 134; a CD player 135; a sound adjusting portion 136; a memory 137; a microphone 138; an external voice/image inputting portion 139; the controller 140; and the connector 150. The in-vehicle apparatus 100 is activated by supplying power from the battery of the vehicle, when the engine key is positioned at Acc or IG.

Hereinafter, the function of each part will be described in detail.

The display portion 131 is provided with a liquid crystal panel and a backlight, and displays a frequency of the received broadcasting, a track number of music being played, a music name being played, and the like, according to the 13-segment display.

The operating portion 132 is provided for selectively changing the operation mode of the in-vehicle apparatus 100, and for operating in various modes that have been changed. The operating portion 132 is provided with a group of buttons including: the tilt/eject button 132a; a function (represented as FUNC in the drawing)/AF button 132b; a TEXT button 132c; a SCREEN button 132d; a SOURCE/PWR button 132e; a MODE button 132f; a MUTE button 132g; a BAND change button 132h; a rotary button 132i; a cross key/enter key button 132j, as shown in FIG. 7.

Here, a description will be given of switching the display between the portable apparatus 10 and the in-vehicle apparatus 100.

Firstly, the in-vehicle apparatus 100 turns on when the SOURCE/POWER button 132e of the in-vehicle apparatus 100 is pushed. When the SOURCE/POWER button 132e is pushed for a short period of time while the portable apparatus 10 is on, the source is changed to the CD playing or radio broadcasting. At this time, the information on the selected source is displayed on the display portion 131 of the in-vehicle apparatus 100, and the navigation image is displayed on a display portion 11 of the portable apparatus 10, without relation to the source.

Next, when the SCREEN button 132d is pushed, the navigation image displayed on the display portion 11 of the portable apparatus 10 can be changed to an image corresponding to the source selected at the in-vehicle apparatus 100.

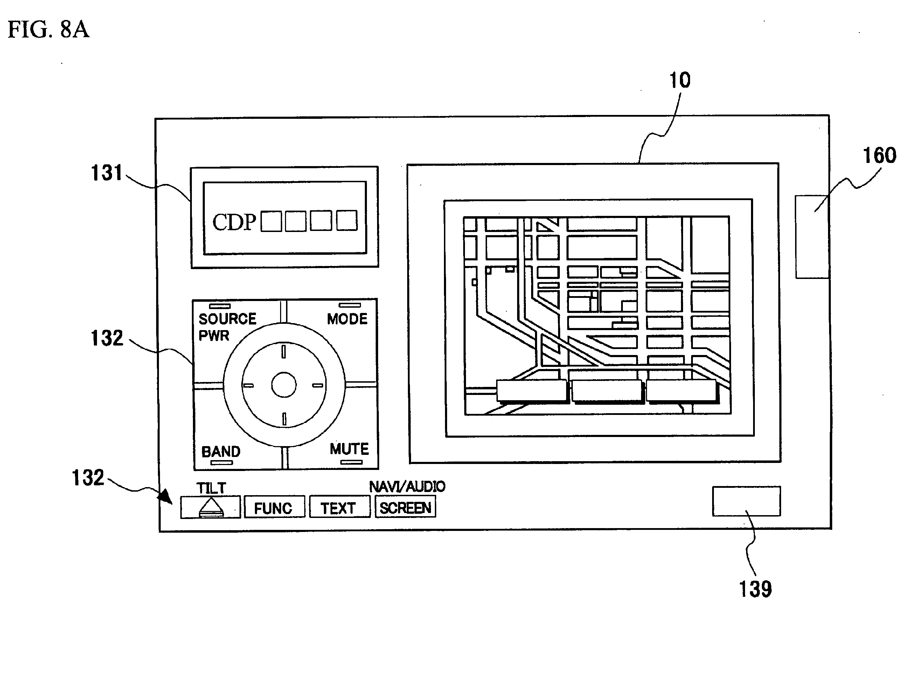

FIG. 8A shows a state where the portable apparatus 10 is attached to the in-vehicle apparatus 100 while the CD is being played and a navigation image is being displayed on the portable apparatus 10.

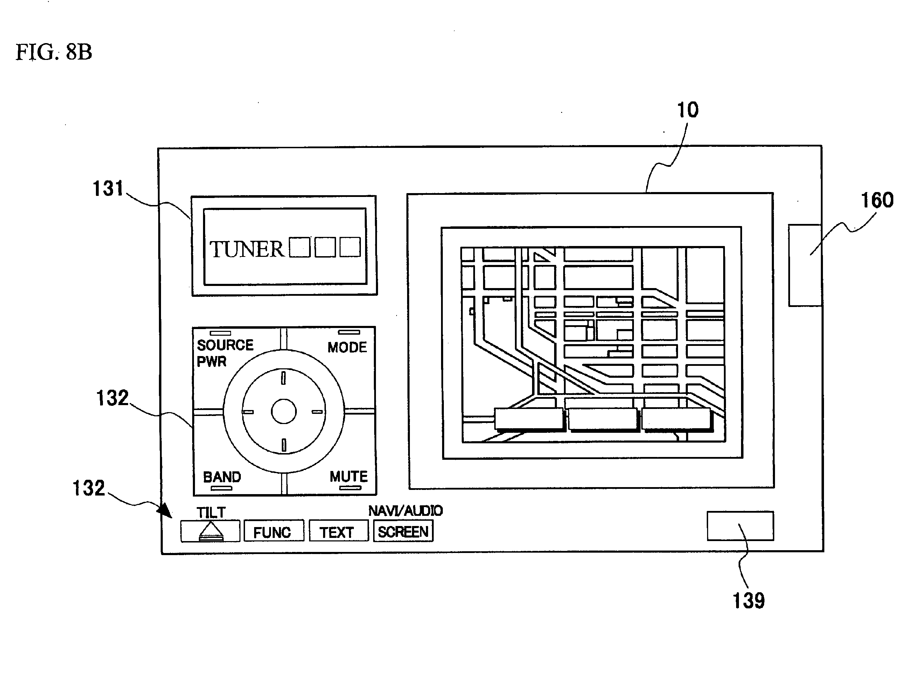

When the SOURCE/POWER button 132e is pushed in the state of FIG. 8A and the source is changed from the CD playing to the radio broadcasting, the information on the radio source is displayed on the display portion 131, as shown in FIG. 8B. Also, the navigation image remains being displayed on the display portion 11 of the portable apparatus 10.

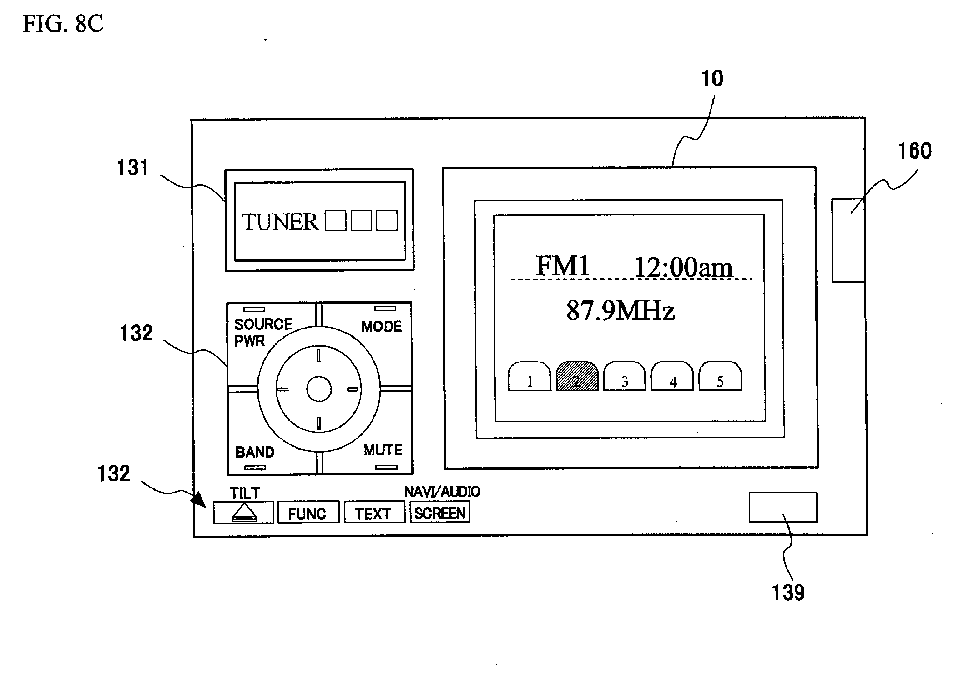

Then, when a user pushes the SCREEN button 132d, the image corresponding to the source being processed by the in-vehicle apparatus 100 is displayed on the display portion 11 of the portable apparatus 10, as shown in FIG. 8C (radio image is displayed in FIG. 8C). A touch panel, described later, is provided in the display portion 11 of the portable apparatus 10. A user is capable of operating the source currently being processed, by selecting the operation buttons displayed on the display portion 11.

In addition, when the SCREEN button 132d is pushed with the radio screen being displayed on the display portion 11, it is possible to return to the navigation image from the radio image, as shown in FIG. 8B. When the portable apparatus 10 is removed from the in-vehicle apparatus 100, the operation of the SCREEN button 132d is invalid.

Furthermore, when a USB (Universal Serial Bus) or the like is connected to the external voice/image inputting portion 139 with the portable apparatus 10 removed from the in-vehicle apparatus 100, it is possible to prevent the change to the USB source, even if the SOURCE/POWER button 132e is pushed.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation portion 19 of the portable apparatus 10, and then the position of the vehicle in which the in-vehicle apparatus 100 having the portable apparatus 10 therein is determined based on the GPS signal.

Herein, the GPS signal may be output to the navigation portion of the portable apparatus 10 through the controller 140, instead of through the controller 20. Alternatively, the GPS information receiver 133 may be composed of the GPS antenna only, so that the GPS signal received by the GPS antenna may be output to the tuner of a GPS information receiver 13, described later, without passing through the controller 140 or the controller 20. Further alternatively, the GPS signal received by a GPS antenna may be output through the controller 20 to the tuner of the GPS information receiver 13 without passing through the controller 140. Various changes may be made as necessary.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The CD player 135 reproduces the data stored in the CD, and outputs the reproduced signal to the controller 140.

Herein, the demodulated signal output from the radio receiver 134 may be output to the sound adjusting portion 136, described later, without passing through the controller 140.

The sound adjusting portion 136 implements signal processing such as volume control or tone control on an audio signal received or demodulated by the radio receiver 134 or the audio signal reproduced by the CD player 135, and then outputs the processed signal to a speaker 155 (first audio outputting portion).

The memory 137 may be composed of a RAM (Random Access Memory) from which data is readable and into which data is writable, and temporarily stores information necessary for control.

The microphone 138 is provided for hands-free communication, and takes in user's voices in the vehicle.

The external voice/image inputting portion 139 is provided with a connection terminal with an external device such as a USB memory, portable audio device, or the like so that an audio signal or data from the external device may be input. The external voice/image inputting portion 139 then sends the signal or data to the controller 140, and outputs the audio signal, data, or the like to the external device connected.

The controller 140 controls the radio receiver 134, the CD player 135, and the sound adjusting portion 136, according to the operation by means of the operating portion 132.

Also, the controller 140 outputs various signals through the connector 150 to the portable apparatus 10, and controls the in-vehicle apparatus 100 on the basis of the various signals input from the portable apparatus 10. For example, the controller 140 outputs the GPS signal received by the GPS information receiver 133 or the audio signal input through the microphone 138, to the portable apparatus 10 by way of the connector 150.

Here, the audio signal input through the microphone 138 may be output to the portable apparatus 10 by way of the connector 150, without passing through the controller 140.

In addition, the voice on communication over a mobile phone connected to the portable apparatus 10 is input through the connector 150 into the controller 140, and is then output through the sound adjusting portion 136 to the speaker 155.

Furthermore, the controller 140 acquires an operation signal corresponding to a menu image of various modes displayed on the display portion 11 of the portable apparatus 10, from the controller 20 of the portable apparatus 10, and then controls the radio receiver 134 and the CD player 135.

Also, power is supplied to the controller 140 from the battery mounted in the vehicle. When the portable apparatus 10 is connected, the controller 140 outputs the power supplied from the battery to the portable apparatus 10.

Here, a vehicle speed pulse and an illumination power supply signal are input into the controller 140 from a vehicle. The controller 140 transfers such input vehicle speed pulse to the controller 20 of the portable apparatus 10. Meanwhile, the vehicle speed pulse may be configured not to be input into the in-vehicle apparatus 100.

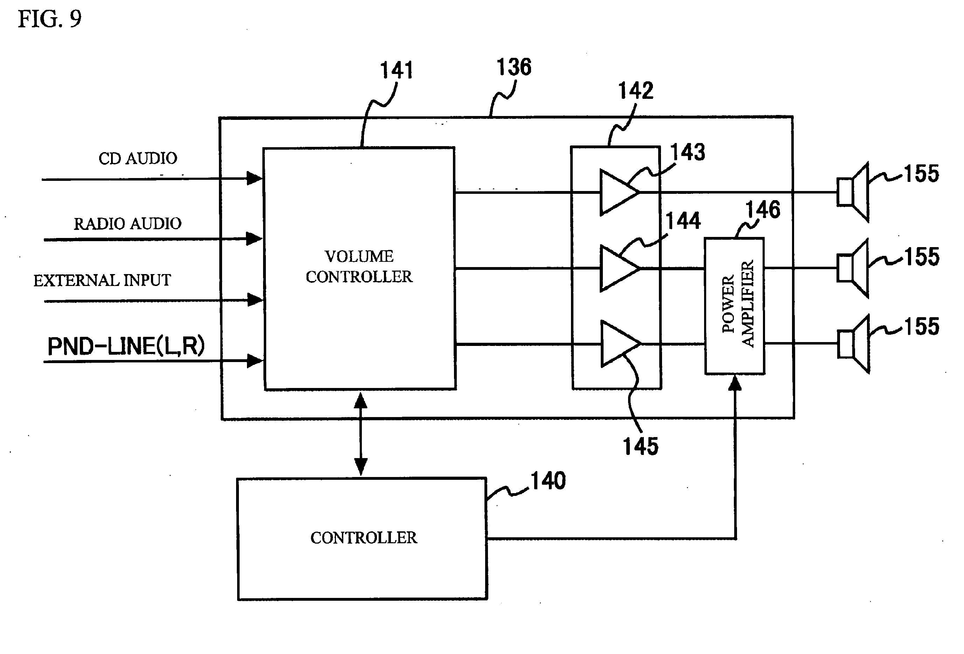

FIG. 9 is a block diagram showing a configuration of the sound adjusting portion.

The sound adjusting portion 136 includes: a volume controller 141; a preamplifier portion 142; and a power amplifier 146, as shown in FIG. 9.

The volume controller 141 is connected to the radio receiver 134, the CD player 135, the external voice/image inputting portion 139, and the navigation portion 19 by signal lines. An external input line shown in FIG. 9 is a line for inputting audio from an external apparatus connected to the external voice/image inputting portion 139, and a PND-LINE is a line for inputting audio from the portable apparatus 10.

The volume controller 141 selects one of an audio signal output from the radio receiver 134, an audio signal of a CD output from the CD player 135, an audio signal of navigation information output from the navigation portion 19, according to an instruction given by the controller 140. The volume controller 141 adjusts the audio signal so that the volume level of the selected audio signal may be equal to the volume level set by a user, and then outputs the audio signal to the preamplifier portion 142.

The speaker 155 is generally provided at both sides of the front of a vehicle and at both sides of the rear thereof, respectively. However, in the present exemplary embodiment, a subwoofer is further included for obtaining sound with more powerful and realistic characteristics.

Therefore, the preamplifier portion 142 includes three preamplifiers, that is, a front speaker preamplifier 145 arranged at the both sides of the front of a vehicle; a rear speaker preamplifier 144 arranged at the both sides of the rear thereof; and a subwoofer preamplifier 143.

The audio signals fed to the front speaker preamplifier 145 and to the rear speaker preamplifier 144 are preliminarily amplified by the front speaker preamplifier 145 and the rear speaker preamplifier 144, and the power is amplified by the power amplifier 146 and then output to the speaker 155. The audio signal output to the subwoofer preamplifier 143 is amplified by the subwoofer preamplifier 143 and then output to the speaker 155.

Next, a description will be given of the portable apparatus 10. The portable apparatus 10 is provided with: the display portion 11; an operating portion 12; the GPS information receiver 13; a speaker (second audio outputting portion) 14; a rechargeable battery 15; a charge circuit 16; a wireless communication transmitter/receiver 17; a memory 18; the navigation portion 19; the controller 20; and the connector 30.

Hereinafter, functions of the components will be described in detail.

The display portion 11 is provided with a liquid crystal panel and a backlight, and is capable of displaying map information generated by the navigation portion 19 and guiding path (route) information to a destination, the received broadcasting frequency transferred from the in-vehicle apparatus 100, a music track number played, music name played, and the like.

Here, the display portions 11 and 131 may employ a flat panel display other than a liquid crystal panel. Examples are organic light emitting display, plasma display panel, cold-cathode flat panel display, or the like.

The touch panel 12 is, for example, disposed on the display screen. When the touch panel is touched by a finger or a dedicated pen, the touched position is detected to determine whether or not there is an input operation.

The GPS information receiver 13 includes an antenna and a tuner, and receives the GPS signal from a satellite. Such received GPS signal is output to the navigation portion 19, and the vehicle location is detected based on the GPS signal. Meanwhile, the in-vehicle apparatus 100 is also provided with the GPS information receiver 133. However, when the portable apparatus 10 is attached to the in-vehicle apparatus 100, the location of the vehicle is identified by use of the GPS signal (and the vehicle speed pulse) received by the GPS information receiver 133. When the portable apparatus 10 is used alone, the location thereof is specified by use of the GPS signal received by the GPS information receiver 13.

The speaker 14 is provided for outputting the audio information of the navigation portion 19, and outputs the audio information only when the portable apparatus 10 is detached from the in-vehicle apparatus 100, namely, used alone separately.

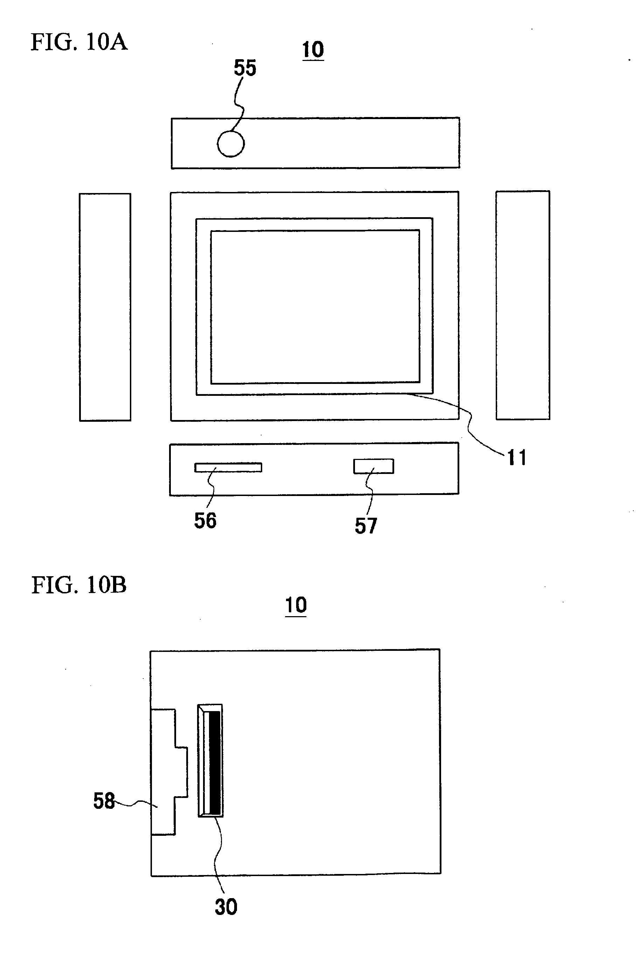

The rechargeable battery 15 supplies power to each portion of the portable apparatus 10, when the portable apparatus 10 is detached from the in-vehicle apparatus 100. When the portable apparatus 10 is attached to the in-vehicle apparatus 100, the power is supplied through the power supply terminals of the connector 30 from the battery of the vehicle and the rechargeable battery 15 is charged by the charge circuit 16. Also, the charge circuit 16 can be supplied with power from the connection terminal through a USB slot 57 (see FIG. 10A), and the rechargeable battery 15 can be charged in this way.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation portion 19 includes a map information storing portion that stores the map information used for navigation, determines current location information with GPS signal from the GPS information receiver 133 or the GPS information receiver 13, and creates a map image for navigation. The created map image may be displayed on the display portion 11. In addition, when the in-vehicle apparatus 100 and the portable apparatus 10 are connected, the vehicle speed pulse is acquired from the vehicle so that the accuracy of the location detection of the vehicle can be improved.

The controller 20 controls each part of the portable apparatus 10. Also, the controller 20 outputs various signals to the in-vehicle apparatus 100 through the connector 30, and controls the portable apparatus 10 based on the various signals input from the in-vehicle apparatus 100. For example, the controller 20 acquires the GPS signal received by the GPS information receiver 133 of the in-vehicle apparatus 100, and outputs it to the navigation portion 19. Also, the controller 20 acquires the audio signal input by the microphone 138 of the in-vehicle apparatus 100 from the controller 140 of the in-vehicle apparatus 100, and controls the navigation portion 19 according to the audio signal acquired. That is to say, the navigation portion 19 can be operated in a hands-free manner. The voice on communication over the mobile phone connected to the wireless communication transmitter/receiver 17 is output to an in-vehicle apparatus side through the connector 30, and is caused to output from the speaker 155 of the in-vehicle apparatus 100. The operation signal on the menu screen or content screen displayed on the display portion 11 is output to the controller 140 of the in-vehicle apparatus 100 through the connector 30. The controller 140 controls the radio receiver 134 or the CD player 135 according to the operation signal transmitted from the controller 20 of the portable apparatus 10.

FIG. 10A shows a front view, top view, bottom view, left-side view, and right-side view of the portable apparatus 10. FIG. 10B is a back view of the portable apparatus 10.

The top face of the portable apparatus 10 is provided with a power button 55 for turning on or off the power of the portable apparatus. The bottom face of the portable apparatus 10 is provided with: an SD (Secure Digital) memory card slot 56; and the USB slot 57. Since the SD card or the USB memory stores the map information, by inserting the SD card or the USB memory into the slots, the controller 20 outputs the map information to the navigation portion 19.

Also, at a top face of the portable apparatus 10, there is provided the power button 55. The power of the portable apparatus 10 is turned on or off by the control of the in-vehicle apparatus 100, when the portable apparatus is attached to the in-vehicle apparatus 100. In addition, when the portable apparatus 10 is removed from the in-vehicle apparatus 100 and used alone, the power is operated on the basis of the on and off operations of the power button 55.

At a backside of the portable apparatus 10, there are provided: the connector 30 electrically connectable with the in-vehicle apparatus 100; and an engagement portion 58 to be engaged with a lock mechanism (not shown) provided at the in-vehicle apparatus 100 side.

In the present exemplary embodiment, when the portable apparatus 10 is connected to the in-vehicle apparatus 100 with the navigation guidance being continued, the audio guidance output to the speaker 14 is stopped and then the audio guidance of the portable apparatus 10 is output to the speaker 155 of the in-vehicle apparatus 100.

By performing such control, it is possible to prevent double outputs from both the speaker 14 of the portable apparatus 10 and the speaker 155 of the in-vehicle apparatus 100.

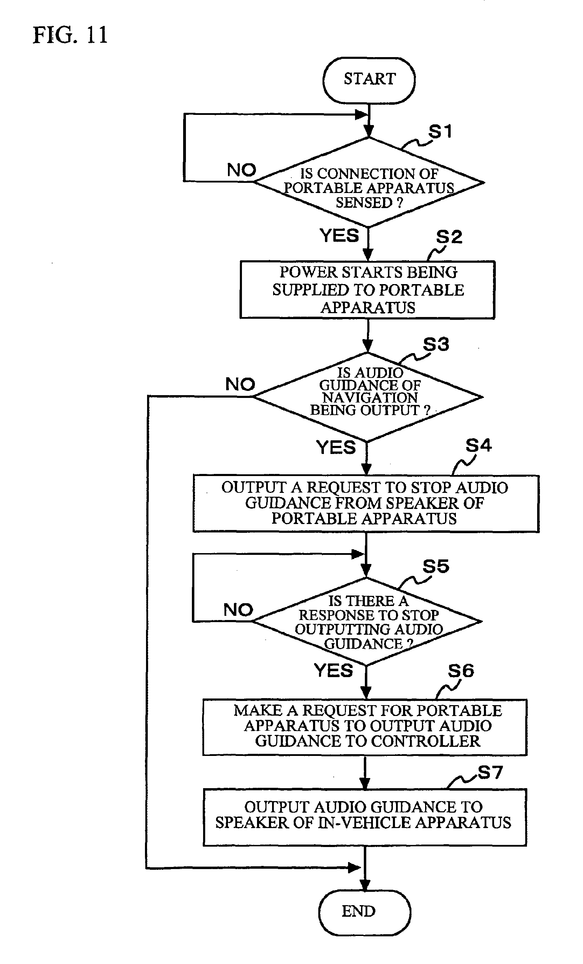

Referring to the flowchart shown in FIG. 11, the control procedure of the controller 140 in the in-vehicle apparatus 100 will be described.

The controller 140 of the in-vehicle apparatus 100 determines whether or not the portable apparatus 10 is connected to the in-vehicle apparatus 100 according to a signal fed by the detecting circuit 200 (step S1). When the connection of the portable apparatus 10 is detected (step S1/YES), power supply to the portable apparatus 10 is started (step S2). By this, the power supplied from the battery of the vehicle is supplied through the connector 150 to the controller 20 of the portable apparatus 10. Next, the controller 140 makes an inquiry to the controller 20 of the portable apparatus 10 to determine whether or not the portable apparatus 10 is outputting the audio guidance for navigation (step S3). After receiving from the controller 20 confirmation that the audio guidance is being output from the speaker 14 of the portable apparatus 10 (step S3/YES), the controller 140 makes a request to the controller 20 to stop outputting the audio guidance to the speaker 14 (step S4).

Next, the controller 140 awaits a response from the controller 20 of the portable apparatus 10 that the output of the audio guidance has been stopped (step S5). When there is a response from the controller 20 of the portable apparatus 10 that the output of the audio guidance has been stopped (step S5/YES), the controller 140 makes a request to the controller 20 to output the audio guidance to the controller 140 (step S6). After receiving the signal of the audio guidance from the controller 20 of the portable apparatus 10, the controller 140 outputs the received signal of the audio guidance to the speaker 155 of the in-vehicle apparatus 100 (step S7).

In the above-described embodiment, when an OFF signal as an audio output fed from the portable apparatus 10 is input into the in-vehicle apparatus 100, the audio is output from the in-vehicle apparatus 100. In addition to this, the controller 20 of the portable apparatus 10 may output an instruction signal to the controller 140 of the in-vehicle apparatus 100, the instruction signal instructing that the audio signal for navigation is output from the in-vehicle apparatus 100. After the controller 140 is fed with the instruction signal and makes a response to the controller 20, the audio signal is output from the speaker 155 of the in-vehicle apparatus 100.

In the above-described embodiment, the controller 140 of the in-vehicle apparatus 100 serves as a main controller, and controls the portable apparatus 10; however, the controller 20 of the portable apparatus 10 may be a main controller to control the in-vehicle apparatus 100.

Furthermore, the portable apparatus 10 may be composed of a mobile telephone with the navigation functionality or a personal digital assistant (PDA). Furthermore, instead of the CD insertion/ejection slot 180 and the CD player 135, there may be provided an insertion/ejection slot and a player thereof for another memory media such as MD (Mini Disc), DVD (Digital Versatile Disk), memory card, or the like, and there may also provided insertion/ejection slots and players for multiple types of memory media. The term GPS as used in this application refers to any suitable satellite navigation system.

Although a few specific exemplary embodiments employed in the present invention have been shown and described, it would be appreciated by those skilled in the art that changes may be made in these exemplary embodiments without departing from the principles of the invention.

## Claims

1. An electronic system comprising:
an electronic apparatus (100); and
a portable navigation apparatus (10) detachably mountable to the electronic apparatus,
wherein:
the portable navigation apparatus comprises a second audio outputting portion (14) for outputting a guidance audio signal;
the electronic apparatus comprises:
a first audio outputting portion (155) for outputting the guidance audio signal, and **characterised by**;
a controller (140) configured to output the guidance audio signal fed from the portable navigation apparatus to the first audio outputting portion, after stopping the guidance audio signal being output to the second audio outputting portion in the connected portable navigation apparatus when the portable navigation apparatus is connected to the electronic apparatus with the navigation being continued.

2. A method of controlling audio output from an electronic apparatus that is detachably provided with a portable navigation apparatus, and that can output a guidance audio signal to the outside through a first audio outputting portion, **characterised by**;
the method comprising outputting, with a controller, the guidance audio signal fed from the portable navigation apparatus to the first audio outputting portion after stopping the guidance audio signal being output to a second audio outputting portion in the connected portable navigation apparatus when the portable navigation apparatus is connected to the electronic apparatus with the navigation being continued.

3. The electronic system as claimed in claim 1,
wherein the controller (140) determines whether the portable navigation apparatus (10) is connected to the electronic apparatus (100).

4. The electronic system as claimed in claim 3, wherein further comprising a detecting circuit (200), wherein the controller (140) determines whether the portable navigation apparatus (10) is connected to the electronic apparatus (100) on the basis of a signal fed by the detecting circuit.

5. The method as claimed in claim 2, further comprising:
determining, with the controller, whether the portable navigation apparatus is connected to the electronic apparatus.

6. The method as claimed in claim 5, wherein
determining, with the controller, whether the portable navigation apparatus is connected to the electronic apparatus is done on the basis of a signal fed by a detecting circuit.

## Patentansprüche

1. Elektronisches System, umfassend
eine elektronische Vorrichtung (100); und
eine lösbar an der elektronischen Vorrichtung anbaubare tragbare Navigationsvorrichtung (10),
wobei
die tragbare Navigationsvorrichtung einen zweiten Audioausgabeabschnitt (14) umfasst für die Ausgabe eines Führungsaudiosignals;
die elektronische Vorrichtung umfasst
einen ersten Audioausgabeabschnitt (155) für die Ausgabe des Führungsaudiosignals, und **gekennzeichnet durch**;
eine Steuerung (140), ausgelegt zur Ausgabe des von der tragbaren Navigationsvorrichtung zugeführten Führungsaudiosignals an den ersten Audioausgabeabschnitt, nach dem Unterbrechen der Ausgabe des Führungsaudiosignals zum zweiten Audioausgabeabschnitt in der verbundenen tragbaren Navigationsvorrichtung, wenn die tragbare Navigationsvorrichtung mit der elektronischen Vorrichtung verbunden ist, wenn mit der Navigation fortgefahren wird.

2. Verfahren zum Steuern der Audioausgabe von einer elektronischen Vorrichtung, die lösbar mit einer tragbaren Navigationsvorrichtung bereitgestellt wird, und die ein Führungsaudiosignal nach außen durch einen ersten Audioausgabeabschnitt ausgeben kann, **gekennzeichnet durch**;
das Verfahren umfassend Ausgeben, mit einer Steuerung, des von der tragbaren Navigationsvorrichtung zugeführten Führungsaudiosignals an den ersten Audioausgabeabschnitt nach dem Unterbrechen der Ausgabe des Führungsaudiosignals zu einem zweiten Audioausgabeabschnitt in der verbundenen tragbaren Navigationsvorrichtung, wenn die tragbare Navigationsvorrichtung mit der elektronischen Vorrichtung verbunden ist, wenn mit der Navigation fortgefahren wird.

3. Elektronisches System gemäß Anspruch 1, wobei die Steuerung (140) bestimmt, ob die tragbare Navigationsvorrichtung (10) mit der elektronischen Vorrichtung (100) verbunden ist.

4. Elektronisches System gemäß Anspruch 3, wobei zudem umfassend eine Erfassungsschaltung (200), wobei die Steuerung (140) bestimmt, ob die tragbare Navigationsvorrichtung (10) mit der elektronischen Vorrichtung (100) verbunden ist, auf der Basis eines von der Erfassungsschaltung zugeführten Signals.

5. Verfahren gemäß Anspruch 2, zudem umfassend
Bestimmen, mit der Steuerung, ob die tragbare Navigationsvorrichtung mit der elektronischen Vorrichtung verbunden ist.

6. Verfahren gemäß Anspruch 5, wobei
das Bestimmen, mit der Steuerung, ob die tragbare Navigationsvorrichtung mit der elektronischen Vorrichtung verbunden ist, auf der Basis eines von der Erfassungsschaltung zugeführten Signals erfolgt.

## Revendications

1. Un système électronique comprenant :
un appareil électronique (100), et
un appareil de navigation portatif (10) pouvant être monté de manière amovible sur l'appareil électronique,
où :
l'appareil de navigation portatif comprend une deuxième partie de production audio (14) destinée à produire un signal de guidage audio,
l'appareil électronique comprend :
une première partie de production audio (155) destinée à produire le signal de guidage audio, et **caractérisé en ce que**
un système de commande (140) configuré de façon à produire le signal de guidage audio envoyé à partir de l'appareil de navigation portatif à la première partie de production audio, après l'arrêt de l'émission du signal de guidage audio vers la deuxième partie de production audio dans l'appareil de navigation portatif connecté lorsque l'appareil de navigation portatif est connecté à l'appareil électronique, la navigation se poursuivant.

2. Un procédé de commande d'une sortie audio d'un appareil électronique qui est équipé de manière amovible d'un appareil de navigation portatif et qui peut envoyer un signal de guidage audio vers l'extérieur par l'intermédiaire d'une première partie de production audio, **caractérisé en ce que** :
le procédé comprend l'émission, avec un système de commande, du signal de guidage audio envoyé à partir de l'appareil de navigation portatif à la première partie de production audio après l'arrêt de l'émission du signal de guidage audio vers une deuxième partie de production audio dans l'appareil de navigation portatif connecté lorsque l'appareil de navigation portatif est connecté à l'appareil électronique, la navigation se poursuivant.

3. Le système électronique selon la revendication 1, où le système de commande (140) détermine si l'appareil de navigation portatif (10) est connecté à l'appareil électronique (100).

4. Le système électronique selon la revendication 3, comprenant en outre un circuit de détection (200), où le système de commande (140) détermine si l'appareil de navigation portatif (10) est connecté à l'appareil électronique (100) en fonction d'un signal envoyé par le circuit de détection.

5. Le procédé selon la revendication 2, comprenant en outre :
la détermination, au moyen du système de commande, si l'appareil de navigation portatif est connecté à l'appareil électronique.

6. Le procédé selon la revendication 5, où :
la détermination, au moyen du système de commande, si l'appareil de navigation portatif est connecté à l'appareil électronique est effectuée en fonction d'un signal envoyé par un circuit de détection.
